# EUROPÄISCHE PATENTANMELDUNG

(11) **EP 2 062 547 A1**
(43) Veröffentlichungstag der Anmeldung: **27.05.2009**
(21) Anmeldenummer: 08169511.6
(22) Anmeldetag: 20.11.2008
(51) Int. Cl.: A61C 1/00, A61C 17/20, B06B 1/02

(54) **Zahnärztliches Ultraschallinstrument und Verfahren zum Betrieb eines zahnärztlichen Ultraschallinstruments**

(30) Priorität: 20.11.2007 DE 102007055583
(71) Anmelder: Sirona Dental Systems GmbH, 64625 Bensheim (DE)
(72) Erfinder: Rein, Matthias, 64653, Lorsch (DE)
(74) Vertreter: Sommer, Peter

(57) **Zusammenfassung**

Die Erfindung betrifft ein Verfahren zum Betrieb eines zahnärztlichen Ultraschallinstruments 1, das eine Ultraschallspitze 2 und einen piezoelektrischen oder magnetostriktiven Antrieb 3 für die Ultraschallspitze 2 umfasst, wobei die Ultraschallspitze 2 während des Betriebs von dem Antrieb 3 mit einer Resonanzfrequenz und einer Leistung als Betriebsparameter angeregt wird und ein charakteristisches Schwingungsmuster S ermittelt und mit einem Vergleichsschwingungsmuster V zwecks Einstellung der Betriebsparameter verglichen wird. Die Erfindung betrifft ferner ein zahnärztliches Ultraschallinstrument 1 zur Behandlung eines Patienten, wobei das Ultraschallinstrument 1 eine Ultraschallspitze 2 und einen piezoelektrischen oder magnetostriktiven Antrieb 3 für die Ultraschallspitze 2 sowie eine Antriebselektronik 6 für den Antrieb 3 aufweist, wobei Mittel zum Vergleich eines Schwingungsmusters S mit einem Vergleichsschwingungsmuster V vorgesehen sind.

## Beschreibung

### Technisches Gebiet

Die Erfindung betrifft ein Verfahren zum Betrieb eines zahnärztlichen Ultraschallinstruments, das eine Ultraschallspitze und einen piezoelektrischen oder magnetostriktiven Antrieb für die Ultraschallspitze umfasst, wobei die Ultraschallspitze während des Betriebs von dem Antrieb mit einer Resonanzfrequenz und einer Leistung als Betriebsparameter angeregt wird.
Die Erfindung betrifft auch ein zahnärztliches Ultraschallinstrument zur Behandlung eines Patienten, wobei das Ultraschallinstrument eine Ultraschallspitze und einen piezoelektrischen oder magnetostriktiven Antrieb für die Ultraschallspitze sowie eine Antriebselektronik für den Antrieb aufweist.

### Stand der Technik

Die bestehenden Sorten von Ultraschallspitzen unterscheiden sich durch ihre Form und ihre Größe. Jede Sorte hat ein eigenes Resonanzverhalten, das bei dem Betrieb bzw. der Anregung der Ultraschallspitze berücksichtigt werden sollte.
Es ist ein Verfahren zum Betrieb eines Ultraschallsystems eines zahnärztlichen Instruments aus der DE 10 2006 006 730 bekannt. Das Ultraschallsystem umfasst ein Bearbeitungswerkzeug und einen piezoelektrischen oder magnetostriktiven Antrieb und wird von dem Antrieb mit einer Resonanzfrequenz des Ultraschallsystems angeregt. Der Antrieb wird mit wenigstens einer weiteren Resonanzfrequenz einer anderen Ordnung des Ultraschallsystems gezielt angeregt.

Ferner ist aus der DE 10 2006 006 730 ein zahnärztliches Instrument mit einem Ultraschallsystem zur Behandlung eines Patienten bekannt. Das Ultraschallsystem umfasst einen piezoelektrischen oder magnetostriktiven Antrieb und ein Bearbeitungswerkzeug, das durch den Antrieb angeregt wird. Ferner ist eine Antriebselektronik für den Antrieb vorgesehen.

Bei dem Betrieb eines Ultraschallinstruments sind die Betriebsparameter zumindest in Abhängigkeit der gewünschten Verwendung zu wählen.

Die Aufgabe der Erfindung besteht darin, ein zahnärztliches Ultraschallinstrument derart auszubilden und anzuordnen, dass verschiedene Ultraschallspitzen optimal betrieben werden.

### Darstellung der Erfindung

Das erfindungsgemäße Verfahren zum Betrieb eines zahnärztlichen Ultraschallinstruments mit einer Ultraschallspitze und einem piezoelektrischen oder magnetostriktiven Antrieb für die Ultraschallspitze sieht vor, die Ultraschallspitze während des Betriebs von dem Antrieb mit einer Resonanzfrequenz und einer Leistung als Betriebsparameter anzuregen, wobei die Ultraschallspitze vor und/oder während des Betriebs mit einem Impuls angeregt und anschließend aus dem sich ergebenden, als elektrisches Signal erfassten charakteristischen Frequenzspektrum ein Schwingungsmuster S unter Einsatz des Antriebs oder eines Schwingungssensors ermittelt wird. Das sich ergebende Signal wird wie im Ausführungsbeispiel beschrieben zwecks Ermittlung des charakteristischen Schwingungsmusters S einer Frequenzanalyse unterzogen.

Generell kann auch während des Betriebs die Anregungsspannung kurz abgeschaltet werden und in dieser Anregungspause das Schwingungsmuster S der abklingenden Schwingung ermittelt werden. Darüber hinaus kann alternativ nach dem Beginn der Anregungspause die Ultraschallspitze mit einem definierten Impuls beaufschlagt und die abklingende Signalantwort zwecks Ermittlung des Schwingungsmusters S erfasst werden. Somit kann auch bei Benutzung der Spitze überprüft werden, ob eine Spitze beschädigt ist und gegebenenfalls die Leistung begrenzt und eine Warnung erzeugt wird. Dabei kann es sich um einen einfachen Impuls, einen Chirp, d. h. einen Impuls, der sich über ein Frequenzband erstreckt, oder um einen Burst, d. h. einen Impuls in Form von mehreren Perioden gleicher Frequenz, handeln.

Anschließend wird das Schwingungsmuster S mit mindestens einem Vergleichsschwingungsmuster V aus einem Speicher verglichen, wobei das Vergleichsschwingungsmuster V dem Schwingungsmuster einer bekannten Ultraschallspitze entspricht. Im Fall der Übereinstimmung des Schwingungsmusters S mit einem Vergleichsschwingungsmuster V werden die zum Betrieb geeigneten Betriebsparameter ausgelesen, d.h. diejenigen Betriebsparameter werden aus einem Speicher ausgelesen, die für einen optimalen Betrieb der dem Vergleichsschwingungsmuster V zugrunde liegenden Ultraschallspitze generiert wurden. Für den Betrieb werden die ausgelesenen Betriebsparameter verwendet oder es werden die manuell eingestellten Betriebsparameter zumindest teilweise angepasst, so dass eine Überlastung der Ultraschallspitze verhindert wird.

Damit also einerseits die Leitungsfähigkeit des Ultraschallinstruments ausgenutzt werden kann und andererseits die verwendete Ultraschallspitze nicht übermäßig beansprucht wird, werden durch das erfindungsgemäße Verfahren die optimalen Betriebsparameter für die jeweilige Ultraschallspitze aus einem Speicher ausgelesen. Die optimalen Betriebsparameter werden zuvor anhand Vertreter jeder Sorte von Ultraschallspitzen ermittelt.

Neben dem grundsätzlichen Betrieb mit optimalen Betriebsparametern bietet das erfindungsgemäße Verfahren auch die Möglichkeit der Kontrolle der verwendeten Ultraschallspitzen während des Betriebs. Durch Verschleiß oder Defekte der Ultraschallspitzen ändert sich deren Resonanzverhalten, so dass eine Zuordnung von optimalen Betriebsparametern nicht mehr möglich sein kann. Der Anwender bekommt einen Hinweis.

Vorteilhaft kann es sein, wenn bei dem Vergleich des Schwingungsmusters S mit den Vergleichsschwingungsmustern V verschiedene Parameter, insbesondere die Anzahl der verschiedenen Resonanzfrequenzen, die Werte der verschiedenen Resonanzfrequenzen und/oder die dazugehörigen Amplituden der Schwingungsmuster S, V in einem definierten Frequenzbereich B verglichen werden. Insbesondere die Werte der verschiedenen Resonanzfrequenzen und die dazugehörigen Amplituden können ein Vergleichskriterium darstellen.

Vorteilhaft kann es auch sein, wenn bei einer Abweichung der zu vergleichenden Parameter bis maximal 10 % die Übereinstimmung von dem Schwingungsmuster S und dem Vergleichsschwingungsmuster V angenommen wird. Jede Ultraschallspitze weist genau genommen ihr eigenes Schwingungsmuster auf. Die Schwingungsmuster von Ultraschallspitzen mit der gleichen Größe und Form weisen aber signifikante Übereinstimmungen auf, auf die es bei dem erfindungsgemäßen Vergleich ankommen kann. Kleinere Abweichungen zwischen dem Schwingungsmuster S und dem Vergleichsschwingungsmuster V können also zugelassen werden, um die Festlegung der optimalen Betriebsparameter vorzunehmen.

Zudem kann es von Vorteil sein, wenn die ausgelesenen Betriebsparameter von der Antriebselektronik automatisch eingestellt werden oder von dem Anwender manuell eingestellt oder überschrieben werden und/oder dem Anwender angezeigt werden und/oder dem Anwender angezeigt werden und der Anwender aufgefordert wird, die Betriebsparameter manuell einzustellen. Bei der automatischen Einstellung ist zu berücksichtigen, dass die Leistung, soweit sie durch den Anwender gewählt werden soll, zumindest begrenzt werden kann, so dass eine Überlastung der Ultraschallspitze verhindert werden kann.

Daneben kann es vorteilhaft sein, wenn die Anpassung oder die Begrenzung der manuell eingestellten Betriebsparameter durch die Antriebselektronik automatisch erfolgt oder dem Anwender angezeigt wird und der Anwender aufgefordert wird, die Betriebsparameter manuell einzustellen. Somit kann der Anwender über eine Anpassung der Betriebsparameter informiert werden.

In diesem Zusammenhang kann es von Vorteil sein, wenn im Fall der fehlenden Übereinstimmung bei dem Vergleich der Anwender zumindest einen Hinweise darüber erhält, dass die eingesetzte Ultraschallspitze nicht erkannt werden kann, da sie unbekannt oder nicht eindeutig, abgenutzt oder beschädigt ist, und/oder dass die Betriebsparameter auf unkritische Werte begrenzt werden und manuell zu verändern bzw. zu wählen sind. Den Vergleichsschwingungsmustern V liegen intakte Ultraschallspitzen zu Grunde. Wenn es also keine Übereinstimmung der Schwingungsmuster S, V gibt, dann wird entweder eine unbekannte Ultraschallspitze verwendet oder die Ultraschallspitze ist defekt.

Es ist auch vorgesehen, dem Vergleich Vergleichsschwingungsmuster V defekter Ultraschallspitzen zugrunde zu legen, sofern einem bestimmten Defekt ein spezifisches Schwingungsmuster zugeordnet werden kann. Der Anwender kann somit bei fehlender Übereinstimmung mit Vergleichsschwingungsmustern V intakter Ultraschallspitzen auf einen bestimmten Defekt der vorliegenden Ultraschallspitze hingewiesen werden, wenn das Schwingungsmuster S mit einem Vergleichsschwingungsmuster V eines Defekts übereinstimmt. Hierzu werden Vergleichsschwingungsmuster V von Ultraschallspitzen mit spezifischen und bekannten Defekten oder Verschleißerscheinungen bereitgestellt.

Das Gerät kann Mittel aufweisen, mittels derer die vorhandenen Vergleichsschwingungsmuster V mit neuen Vergleichsmustern ergänzt werden können, um sicherzustellen, dass neue Varianten berücksichtigt werden können. Ferner kann es von Vorteil sein, wenn das erfindungsgemäße Verfahren mit dem Treten des Fußschalters automatisch eingeleitet wird und/oder während des Betriebs in regelmäßigen Zeitabständen eingeleitet wird. Der Anwender muss nicht eine gesonderte Einstellung vornehmen. Mit dem Bedienen bzw. Einschalten des Ultraschallinstruments mittels des Fußschalters kann der erfindungsgemäße Vergleich automatisch eingeleitet werden.

Je nach Art und Geometrie der eingesetzten Ultraschallspitze müssen die Betriebsparameter des Ultraschallinstruments der eingesetzten Ultraschallspitze nach angepasst werden. Hierzu könnten die Ultraschallspitzen entsprechend gekennzeichnet sein, um der jeweiligen Ultraschallspitze die zu wählenden Betriebsparameter, zum Beispiel aus einem hinterlegten Datensatz, zuzuordnen. Dies ist allerdings für den Anwender recht aufwendig, da er manuell die Betriebsparameter auswählen müsste.

Ein weiterer Gegenstand der Erfindung betrifft ein zahnärztliches Ultraschallinstrument, wobei das Ultraschallinstrument eine Ultraschallspitze und einen piezoelektrischen oder magnetostriktiven Antrieb für die Ultraschallspitze sowie eine Antriebselektronik für den Antrieb aufweist, wobei Mittel zur Generierung eines Schwingungsimpulses für die Ultraschallspitze, ein Schwingungssensor zur Aufnahme eines Schwingungsmuster S der Ultraschallspitze, ein Speicher für Vergleichsschwingungsmuster V und Mittel zum Vergleich des Schwingungsmusters S mit den Vergleichsschwingungsmustern V vorgesehen sind.

Ein derartiges zahnärztliches Ultraschallinstrument ermöglicht das Erkennen einer Ultraschallspitze anhand des spezifischen Schwingungsmusters, sodass die Betriebsparameter für die verwendete Ultraschallspitze auf die spezifische Ultraschallspitze ausgerichtet werden können und diese mit maximaler Leistung und gleichzeitiger Vermeidung von Überbelastung betrieben werden kann. Die Bedienung eines derartigen zahnärztlichen Instruments ist besonders einfach, da die Antriebselektronik die entsprechenden Betriebsparameter aus einem Speicher entnimmt und die Einstellung der Betriebsparameter automatisch erfolgt. Soweit die Leistung durch den Anwender gewählt wird, wird zumindest die maximale Leistung durch die Antriebselektronik begrenzt.

Hierbei kann es von Vorteil sein, wenn der Antrieb als Schwingungssensor ausgebildet ist. Ein gesonderter Sensor ist nicht notwendig. Insbesondere piezoelektrische Antriebe können neben ihrer Funktion als Antrieb auch als Schwingungssensor verwendet werden.

Daneben kann es vorteilhaft sein, wenn ein Anzeigemittel für die aktuellen und/oder die ausgelesenen Betriebsparameter und/oder für Hinweise an den Anmelder betreffend die Betriebsparameter und/oder für Informationen über die Ultraschallspitze vorgesehen ist. Der Anwender, der den Betrieb des Ultraschallinstruments mit der Ultraschallspitze aufnimmt, kann unmittelbar über das Anzeigemittel eine Information darüber erhalten, welche Betriebsparameter eingestellt sind bzw. für den Betrieb dieser Ultraschallspitze empfohlen werden. Alternativ kann er eine Information darüber erhalten, dass die eingesetzte Ultraschallspitze nicht erkannt werden konnte, da sie ein unbekanntes Schwingungsmuster aufweist, dessen Abweichungen zu den Vergleichsschwingungsmustern V zu groß sind. Je nach Art und Umfang der gespeicherten Vergleichs- Schwingungsmuster kann eine Information darüber erfolgen, ob die vorliegende Ultraschallspitze einen Defekt oder einen erhöhten Verschleiß aufweist.

Hierzu kann es vorteilhaft sein, wenn der Speicher des Ultraschallinstruments Vergleichsschwingungsmuster V von bekannten intakten Ultraschallspitzen und/oder von Ultraschallspitzen mit spezifischen Defekten aufweist. Somit kann der Anwender auf einen spezifischen Defekt hingewiesen werden.

### Kurze Beschreibung der Zeichnung

In den Zeichnungen sind Ausführungsbeispiele der Erfindung dargestellt. Es zeigt die:
- Fig. 1: ein zahnärztliches Ultraschallinstrument, die
- Fig. 2: zwei Schwingungsmuster S, V im Vergleich, die
- Fig. 3: ein Blockschaubild des erfindungsgemäßen Verfahrens.

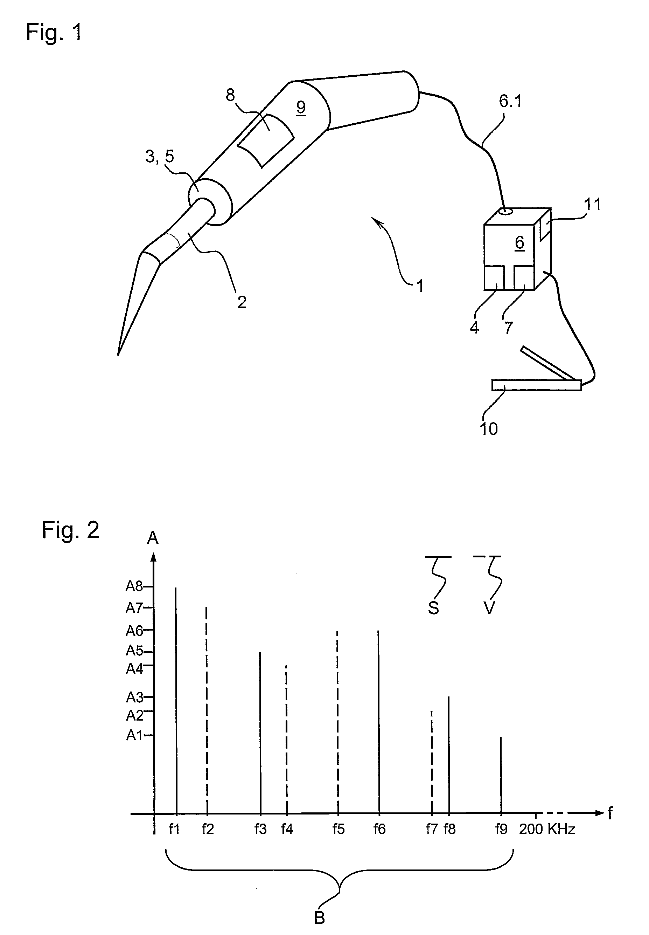

Ein in Fig. 1 dargestelltes zahnärztliches Ultraschallinstrument 1 weist ein Handstück 9 mit einer Ultraschallspitze 2 und einem piezoelektrischen Antrieb 3 für die Ultraschallspitze 2 auf. Der piezoelektrische Antrieb 3 dient gleichermaßen als Schwingungssensor 5. Das Ultraschallinstrument 1 ist über eine Anschlussleitung 6.1 mit einer Antriebselektronik 6 verbunden. Die Antriebselektronik 6 weist einen Speicher 4 für Vergleichsschwingungsmuster V und Mittel 7 zum Vergleich des Schwingungsmusters S mit einem bzw. mehreren Vergleichs-Schwingungsmustern V auf.

An dem Handstück 9 ist ein Anzeigemittel 8 für den Anwender zur Erkennung der aktuellen bzw. der ausgelesenen Betriebsparameter und/oder zur Erkennung der Hinweise an den Anmelder betreffend die Einstellung der Betriebsparameter und/oder für Informationen über die Ultraschallspitze 2 vorgesehen. Alternativ oder ergänzend kann das Anzeigemittel 8 auch an der Antriebselektronik 6 vorgesehen sein. Ferner ist an der Antriebselektronik 6 ein Fußschalter 10 angeschlossen. Zudem weist die Antriebselektronik 6 Mittel 11, mittels derer die vorhandenen Vergleichsschwingungsmuster V mit neuen Vergleichsmustern ergänzt werden können, auf.

Fig. 2 zeigt ein Eigenresonanzmuster bzw. ein Schwingungsmuster S der Ultraschallspitze 2 sowie ein Vergleichsschwingungsmuster V. Das Vergleichs-Schwingungsmuster V ist gestrichelt dargestellt. Das Schwingungsmuster S und das Vergleichsschwingungsmuster V unterscheiden sich in verschiedenen Parametern, nämlich der Anzahl der verschiedenen Resonanzfrequenzen in einem definierten Frequenzbereich B zwischen 0 kHz und 200 kHz, der Frequenzwerte der verschiedenen Resonanzfrequenzen und der dazugehörigen Amplituden. Das Schwingungsmuster S weist fünf Resonanzfrequenzen für die Frequenzwerte f1, f3, f6, f8 und f9 mit den Amplituden A8, A5, A6, A3 und A1 auf. Das Vergleichsschwingungsmuster V weist vier Resonanzfrequenzen für die Frequenzwerte f2, f4, f5 und f7 mit den Amplituden A2, A4, A6 und A7 auf. Das Schwingungsmuster S und das Vergleichsschwingungsmuster V stimmen nicht überein.

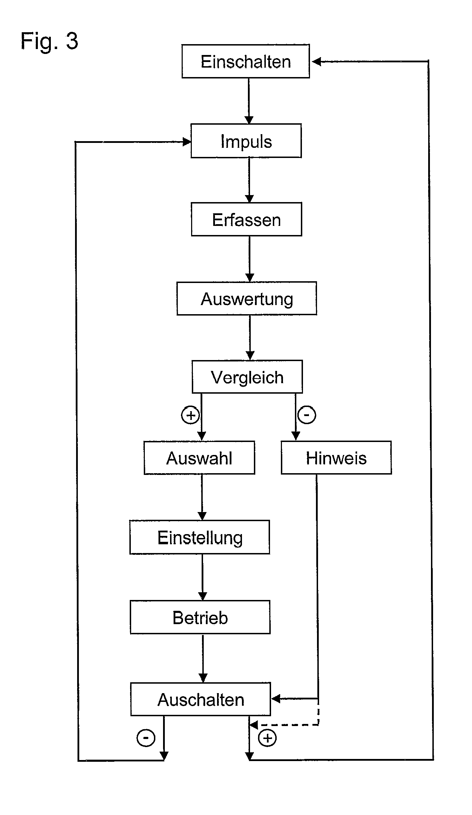

Gemäß dem Blockschaubild in Fig. 3 wird die Ultraschallspitze 2 nach dem Einschalten, vorzugsweise mittels des Fußschalters 10, noch vor dem eigentlichen Betrieb mit einem Impuls angeregt. Dabei kann es sich um einen einfachen Impuls, einen Chirp, d. h. einen Impuls, der sich über ein Frequenzband erstreckt, oder um einen Burst, d. h. einen Impuls in Form von mehreren Perioden gleicher Frequenz, handeln.

Generell kann auch während des Betriebs die Anregungsspannung kurz abgeschaltet werden und in dieser Anregungspause das Schwingungsmuster S der abklingenden Schwingung ermittelt werden. Darüber hinaus kann alternativ nach dem Beginn der Anregungspause die Ultraschallspitze mit einem definierten Impuls beaufschlagt und die abklingende Signalantwort zwecks Ermittlung des Schwingungsmusters S erfasst werden. Somit kann auch bei Benutzung der Spitze überprüft werden, ob eine Spitze beschädigt ist und gegebenenfalls die Leistung begrenzt und eine Warnung erzeugt wird.

Anschließend wird das abklingende Signal der angeregten Ultraschallspitze 2 mittels des als Schwingungssensor 5 ausgebildeten Piezo-Antriebs 3 erfasst. Die Auswertung des Signals zwecks Ermittlung des Eigenresonanzmusters bzw. des Schwingungsmusters S der Ultraschallspitze 2 erfolgt durch Anwendung einer Fourieranalyse wie eine Fast Fourieranalyse (FFT) oder eine Diskrete Fourieranalyse (DFT).

Danach erfolgt der Vergleich des Schwingungsmusters S mit mindestens einem Vergleichsschwingungsmuster V aus dem Speicher 4. Das Vergleichsschwingungsmuster V entspricht dem Schwingungsmuster einer bekannten Ultraschallspitze 2. Bei dem Vergleich des Schwingungsmusters S mit den Vergleichsschwingungsmustern V werden verschiedene Parameter, insbesondere die Anzahl der verschiedenen Resonanzfrequenzen in einem definierten Frequenzbereich B gemäß Fig. 2, die Werte der verschiedenen Resonanzfrequenzen und/oder die dazugehörigen Amplituden der Schwingungsmuster S, V verglichen.

Das jeweilige Schwingungsmuster S, V stellt sozusagen einen Fingerabdruck des Systems mit der Ultraschallspitze 2 dar und dient dem Erkennen der Ultraschallspitze 2 oder zumindest einer Art der Ultraschallspitze 2.

Wenn der Vergleich positiv ausfällt, also eine Übereinstimmung des Schwingungsmusters S mit einem Vergleichsschwingungsmuster V vorliegt, dann werden die Betriebsparameter für die Ultraschallspitze 2 aus dem Speicher 4 ausgelesen. Diese optimalen Betriebsparameter wurden bei dem Betrieb der bekannten Ultraschallspitze 2 ermittelt und können vom Hersteller werkseitig vorgegeben sein. Weitere optimale Betriebsparameter für andere Ultraschallspitzen können herstellerseitig, vorzugsweise in Form eines Updates zur Verfügung gestellt werden.

Für den anschließenden Betrieb werden die ausgelesenen Betriebsparameter eingestellt oder zumindest Grenzwerte für die verschiedenen Parameter vorgegeben, innerhalb derer sich der Anwender bewegen kann. Die Einstellung erfolgt vorzugsweise automatisch oder auch manuell auf Grundlage einer Vorgabe über das Anzeigemittel 8, so dass eine Überlastung der Ultraschallspitze 2 verhindert wird. Wenn der Anwender das Gerät nicht ausschaltet, können in regelmäßigen Zeitabständen erneut die Bestimmung des Schwingungsmusters S und der Vergleich erfolgen, so dass die Betriebsparameter ständig optimiert und kontrolliert sind.

Wenn der Vergleich negativ ausfällt, erhält der Anwender einen Hinweis darauf, dass die eingesetzte Ultraschallspitze 2 entweder nicht erkannt werden konnte, da sie ein nicht hinterlegtes Schwingungsmuster aufweist, d. h. dass sie unbekannt, oder dass sie abgenutzt oder beschädigt ist. Durch Abnutzung bzw. Beschädigung ändern sich das Schwingungsverhalten und damit das Schwingungsmuster S. Die Vergleichsschwingungsmuster V können auch spezifische Muster defekter Ultraschallspitzen aufweisen, so dass im Fall einer Übereinstimmung zwischen dem Schwingungsmuster S und dem Vergleichsschwingungsmuster V eines spezifischen Defekts der Anwender eine Information über den erkannten Defekt erhält. In diesem Fall ist die Spitze 2 auszutauschen. In sonstigen Fällen, in denen der Vergleich negativ ausfällt, sind die Betriebsparameter manuell zu wählen. Das Gerät ist auszuschalten bzw. schaltet gegebenenfalls automatisch ab.

### Bezugszeichen

- 1: Ultraschallinstrument
- 2: Ultraschallspitze
- 3: Antrieb
- 4: Speicher
- 5: Schwingungssensor
- 6: Antriebselektronik
- 6.1: Anschlussleitung
- 7: Mittel zum Vergleich
- 8: Anzeigemittel
- 9: Handstück
- 10: Fußschalter
- 11: Mittel zur Aktualisierung
- B: Frequenzbereich
- S: Schwingungsmuster
- V: Vergleichsschwingungsmuster
- A1 bis A8: Amplituden
- f1 bis f9: Frequenzwerte

## Patentansprüche

1. Verfahren zum Betrieb eines zahnärztlichen Ultraschallinstruments (1), das eine Ultraschallspitze (2) und einen piezoelektrischen oder magnetostriktiven Antrieb (3) für die Ultraschallspitze (2) umfasst, wobei die Ultraschallspitze (2) während des Betriebs von dem Antrieb (3) mit einer Resonanzfrequenz und einer Leistung als Betriebsparameter angeregt wird, **dadurch gekennzeichnet, dass**
a) die Ultraschallspitze (2) mit einem Impuls angeregt und anschließend aus dem sich ergebenden Frequenzspektrum ein charakteristisches Schwingungsmuster S der Ultraschallspitze (2) ermittelt wird;
b) das Schwingungsmuster S mit mindestens einem Vergleichsschwingungsmuster V aus einem Speicher (4) verglichen wird, wobei das Vergleichsschwingungsmuster V dem Schwingungsmuster einer bekannten Ultraschallspitze (2) entspricht;
c) bei Übereinstimmung des Schwingungsmusters S mit einem Vergleichsschwingungsmuster V die Betriebsparameter aus dem Speicher (4) ausgelesen werden, die für einen optimalen Betrieb der dem Vergleichsschwingungsmuster V zugrunde liegenden Ultraschallspitze (2) generiert wurden;
d) für den Betrieb die ausgelesenen Betriebsparameter verwendet werden oder die manuell eingestellten Betriebsparameter zumindest teilweise angepasst oder begrenzt werden.

2. Verfahren nach Anspruch 1, **dadurch gekennzeichnet, dass** bei dem Vergleich des Schwingungsmusters S mit den Vergleichsschwingungsmustern V verschiedene Parameter, insbesondere die Anzahl der verschiedenen Resonanzfrequenzen, die Werte der verschiedenen Resonanzfrequenzen und/oder die dazugehörigen Amplituden der Schwingungsmuster S, V in einem definierten Frequenzbereich B verglichen werden.

3. Verfahren nach Anspruch 2, **dadurch gekennzeichnet, dass** bei einer Abweichung der zu vergleichenden Parameter bis maximal 10 % die Übereinstimmung von dem Schwingungsmuster S und dem Vergleichsschwingungsmuster V angenommen wird.

4. Verfahren nach Anspruch 1 bis 3, **dadurch gekennzeichnet, dass** bei Schritt d) die ausgelesenen Betriebsparameter
i) von einer Antriebselektronik (6) automatisch eingestellt werden und/oder dem Anwender angezeigt werden oder
j) dem Anwender angezeigt werden und der Anwender aufgefordert wird, die Betriebsparameter manuell einzustellen.

5. Verfahren nach Anspruch 1, **dadurch gekennzeichnet, dass** bei Schritt d) die Anpassung oder Begrenzung der manuell eingestellten Betriebsparameter
i) durch die Antriebselektronik (6) automatisch erfolgt oder
j) dem Anwender angezeigt werden und der Anwender aufgefordert wird, die Betriebsparameter manuell einzustellen (oder zu überschreiben).

6. Verfahren nach Anspruch 1, **dadurch gekennzeichnet, dass** im Fall der fehlenden Übereinstimmung bei dem Vergleich nach Schritt b) der Anwender zumindest einen der folgenden Hinweise erhält:
e) die eingesetzte Ultraschallspitze (2) konnte nicht erkannt werden, da sie
i) unbekannt oder nicht eindeutig ist,
ii) abgenutzt ist,
iii) beschädigt ist,
f) die Betriebsparameter werden auf unkritische Werte begrenzt und sind manuell zu verändern,
g) die eingesetzte Ultraschallspitze (2) ist untauglich und das Instrument ist auszuschalten oder wird automatisch ausgeschaltet.

7. Verfahren nach Anspruch 6, **dadurch gekennzeichnet, dass** für den Hinweis gemäß ii) und iii) Vergleichsschwingungsmuster V von Ultraschallspitzen (2) mit spezifischen und bekannten Defekten oder Verschleißerscheinungen verwendet werden.

8. Verfahren nach Anspruch 1, **dadurch gekennzeichnet, dass** die Schritte a) bis d) mit dem Treten eines Fußschalters (10) automatisch initiiert werden und/oder während des Betriebs in regelmäßigen Zeitabständen initiiert werden.

9. Verfahren nach einem der vorhergehenden Ansprüche, **dadurch gekennzeichnet, dass** das Schwingungsmuster S der Ultraschallspitze (2) mittels des als Sensor ausgebildeten Antriebs (3) oder mittels eines separaten Schwingungssensors (5) ermittelt wird.

10. Zahnärztliches Ultraschallinstrument (1), wobei das Ultraschallinstrument (1) eine Ultraschallspitze (2) und einen piezoelektrischen oder magnetostriktiven Antrieb (3) für die Ultraschallspitze (2) sowie eine Antriebselektronik (6) für den Antrieb (3) aufweist, **dadurch gekennzeichnet, dass** Mittel (3, 6) zur Erzeugung eines Schwingungsimpulses für die Ultraschallspitze (2), ein Schwingungssensor (5) zur Aufnahme eines Schwingungsmusters S der Ultraschallspitze (2), ein Speicher (4) für Vergleichsschwingungsmuster V und Mittel (7) zum Vergleich des Schwingungsmusters S mit den Vergleichsschwingungsmustern V vorgesehen sind.

11. Ultraschallinstrument (1) nach Anspruch 10, **dadurch gekennzeichnet, dass** der Antrieb (3) als Schwingungssensor (5) ausgebildet ist.

12. Ultraschallinstrument (1) nach Anspruch 10 oder 11, **dadurch gekennzeichnet, dass** ein Anzeigemittel (8) für die aktuellen und/oder die ausgelesenen Betriebsparameter und/oder für Hinweise an den Anmelder betreffend die Betriebsparameter und/oder für Informationen über die Ultraschallspitze (2) vorgesehen ist.

13. Ultraschallinstrument (1) nach einem der Ansprüche 10 bis 12, **dadurch gekennzeichnet, dass** der Speicher (4) Vergleichsschwingungsmuster V von bekannten intakten Ultraschallspitzen (2) und/oder von Ultraschallspitzen (2) mit spezifischen Defekten aufweist.
